Europäisches Patentamt

(19) European Patent Office

Office européen des brevets

(11) Numéro de publication : **0 090 325**
**B1**

(12) **FASCICULE DE BREVET EUROPÉEN**

(45) Date de publication du fascicule du brevet :
20.08.86

(51) Int. Cl.⁴ : **B 60 L 11/02, H 02 P 9/14**

(21) Numéro de dépôt : 83102821.2

(22) Date de dépôt : 22.03.83

(54) Système de régulation de locomotive diesel électrique.

(30) Priorité : 26.03.82 FR 8205162

(43) Date de publication de la demande :
05.10.83 Bulletin 83/40

(45) Mention de la délivrance du brevet :
20.08.86 Bulletin 86/34

(84) Etats contractants désignés :
AT BE CH DE FR GB IT LI LU NL SE

(56) Documents cités :
FR-A- 1 446 615
US-A- 2 247 010
US-A- 3 263 142
US-A- 3 370 218
BULLETIN OERLIKON, no. 364/365, octobre 1965, pages 32-38, Zürich, CH E. DÜNNER: "Vollautomatische Oerlikon-Steuerung für dieselelektrische Triebfahrzeuge"

(73) Titulaire : **ALSTHOM**
**38, avenue Kléber**
**F-75784 Paris Cédex 16 (FR)**

(72) Inventeur : **Grand-Perret, Philippe**
**21, rue de Trévise**
**F-75009 Paris (FR)**
Inventeur : **Lerouge, Bernard**
**225, rue des Landes**
**F-78400 Chatou (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne un système de régulation de locomotive dont un moteur Diesel entraîne un générateur principale fournissant l'énergie électrique aux moteurs électriques de traction actionnant la locomotive, ledit système de régulation agissant sur l'injection du gasoil dans le moteur Diesel ainsi que sur l'excitation du générateur principal à partir de nombreux paramètres tels que la vitesse du Diesel, la vitesse de la locomotive, la pression de suralimentation et la température du groupe électrogène etc... de façon à réaliser les conditions de fonctionnement optimales.

On sait que la puissance du moteur Diesel se présente en coordonnées rectangulaire tension électrique/intensité de courant, fournies aux bornes du générateur principal, comme une hyperbole équilatère du premier quadrant à concavité vers le haut pour une vitesse donnée du moteur. La puissance dont le moteur Diesel est capable, égale au produit tension par intensité, est ainsi constante. On sait aussi que le générateur principal accouplé au moteur Diesel comporte une courbe caractéristique en coordonnées tension/intensité à concavité vers le bas dans le premier quadrant coupant l'hyperbole du moteur Diesel en deux points pour une même vitesse du moteur Diesel. Les systèmes de régulation tentent de concilier les deux caractéristiques de manière à utiliser au mieux la puissance délivrée par le moteur Diesel.

En effet, le but de la régulation est qu'à tout instant le générateur appelle une puissance électrique qui soit toujours égale et ne soit jamais supérieure à la puissance du moteur Diesel afin de l'utiliser en maximum et ne jamais le mettre dans la situation d'atteindre sa butée auquel cas il baissera de vitesse. Dans les systèmes de régulation classiques, il est utilisé une autorégulation basée sur le fait que lorsque chute la vitesse du Diesel, la vitesse du générateur auxiliaire entraîné par le Diesel baisse également ce qui provoque une réduction de l'excitation donc de la puissance du générateur principal. Il est utilisé aussi une régulation externe au moyen d'un rhéostat qui commande et accentue la réduction du courant d'excitation du générateur principal lorsque la puissance du Diesel a tendance à augmenter par rapport à une valeur fixée en fonction de la vitesse Diesel.

Dans les systèmes antérieurs de régulation des locomotives Diesel électriques il existe un manipulateur de commande actionné par le conducteur, lequel affiche une vitesse de rotation du moteur Diesel. Le manipulateur est à volant ou à poignée, imposant une vitesse de rotation Diesel déterminée. Dans les systèmes antérieurs il existe aussi un régulateur de puissance Diesel faisant varier l'injection du gasoil en fonction d'une comparaison entre la mesure de la vitesse de rotation réelle du moteur Diesel et la valeur affichée par le conducteur, le but de l'augmentation ou de la diminution de l'injection étant de maintenir la vitesse de rotation souhaitée à une valeur constante. Les régulateurs de puissance Diesel antérieurs utilisent un matériel de conception hydraulique.

Dans les systèmes antérieurs et notamment dans celui décrit dans le document US-A-3 370 218, il existe aussi un régulateur d'excitation du générateur principal qui règle l'excitation en fonction de la vitesse du moteur Diesel mesurée au moyen d'amplificateurs magnétiques et dont le rôle est de faire en sorte que pour une vitesse donnée la puissance appelée par le générateur principal soit toujours inférieure ou égale à la puissance que peut fournir le moteur Diesel.

Toutefois les systèmes de régulation utilisés ont eu longtemps pour inconvénient de n'agir que dans la zone de l'hyperbole du moteur Diesel en coordonnées électriques tension/intensité et non dans les branches à forte intensité et faible tension ou forte tension et faible intensité disposées de part et d'autre des points de sécance de l'hyperbole et confondues avec les portions de courbe en charge du générateur principal. Ces systèmes de régulation antérieurs avaient pour inconvénient de ne pas faire agir la régulation de puissance au moment du démarrage du convoi ou des grandes vitesses de convoi.

Ceci a été résolu comme le montre les documents FR-A-1 446 615 et US-A-3 263 142 qui prévoient des dispositions permettant de limiter l'intensité au démarrage de la locomotive et la tension à grande vitesse, toutefois le fonctionnement s'effectue à partir d'une consigne de vitesse ; la régulation agit pour maintenir d'une part la vitesse de rotation à la valeur de consigne et d'autre part la puissance, demandée par le générateur principal au moteur, sous une limite prédéterminée, en fonction de la vitesse.

Le point de fonctionnement du moteur n'est donc qu'exceptionnellement sur une courbe optimale de puissance pour une vitesse déterminée.

Pour remédier à cet inconvénient, la présente invention propose un système de régulatation pour locomotive ayant un moteur Diesel qui entraîne un générateur principal chargé de fournir l'énergie électrique nécessaire aux moteurs électriques de traction de la locomotive, ledit système de régulation recevant au moins une consigne de commande par l'intermédiaire d'un manipulateur sur ordre du conducteur de la locomotive et comportant une régulation de puissance électrique appelée et une régulation de puissance du moteur Diesel qui agissent respectivement sur un dispositif d'excitation du générateur principal et sur un dispositif de commande de pompe d'injection à l'aide de signaux obtenus par comparaison entre des valeurs prédéterminées, fonction de la consigne de commande, et des mesures correspondante. Selon une caractéristique de l'invention, la consigne de commande est multiple et comporte au moins une consigne d'intensité et une consigne de tension du générateur principal ainsi qu'une consigne d'injection du moteur Diesel, lesquelles consignes sont respectivement comparées chacune à une mesure correspondante dans un comparateur distinct fournissant des signaux d'écart à un intégrateur, dans la régulation de puissance électrique appelée, pour commander le dispositif d'excitation du générateur principal de telle sorte qu'on délivre un ordre d'augmentation si lesdits signaux· de mesure sont inférieurs auxdites consignes et un ordre de diminution si au moins un desdits signaux de mesure est égal ou supérieur à chacune desdites consignes. De plus la régulation de puissance du moteur Diesel est effectuée par action sur la vitesse du moteur Diesel à l'aide du dispositif de commande de pompe d'injection commandé par le signal d'écart d'un comparateur recevant un signal de mesure de la vitesse réelle du moteur Diesel et une consigne définitive de vitesse obtenue par sommation d'une consigne provisoire de vitesse du moteur Diesel avec une éventuelle consigne extérieure de vitesse du moteur Diesel, ladite consigne provisoire étant établie automatiquement selon une loi vitesse-injection prédéterminée et en fonction d'une mesure d'injection de gasoil dans le moteur Diesel.

Avantageusement, ledit manipulateur est un manipulateur à impulsion et/ou un manipulateur analogique.

Selon une particularité d'une mise en oeuvre préférée de l'invention ladite consigne multiple affichée par le manipulateur est apte à recevoir un ordre de régression si la pression de suralimentation n'est pas suffisante ou s'il y a échauffement du moteur Diesel.

Selon une autre particularité de cette mise en oeuvre l'organe d'établissement de la consigne de vitesse Diesel provisoire est apte à recevoir un ordre de translation progressive vers les injections plus faibles de la courbe diesel-injection pour des pressions de suralimentation trop basses ou des températures du moteur Diesel trop élevées.

En se référant aux figures schématiques 1 et 2 ci-jointes on va décrire ci-après un exemple de mise en oeuvre de la présente invention, exemple donné à titre purement illustratif et nullement limitatif.

La figure 1 représente un schéma synoptique de la régulation de puissance électrique à partir des ordres provenant d'un manipulateur.

La figure 2 représente un schéma synoptique de la régulation de puissance Diesel.

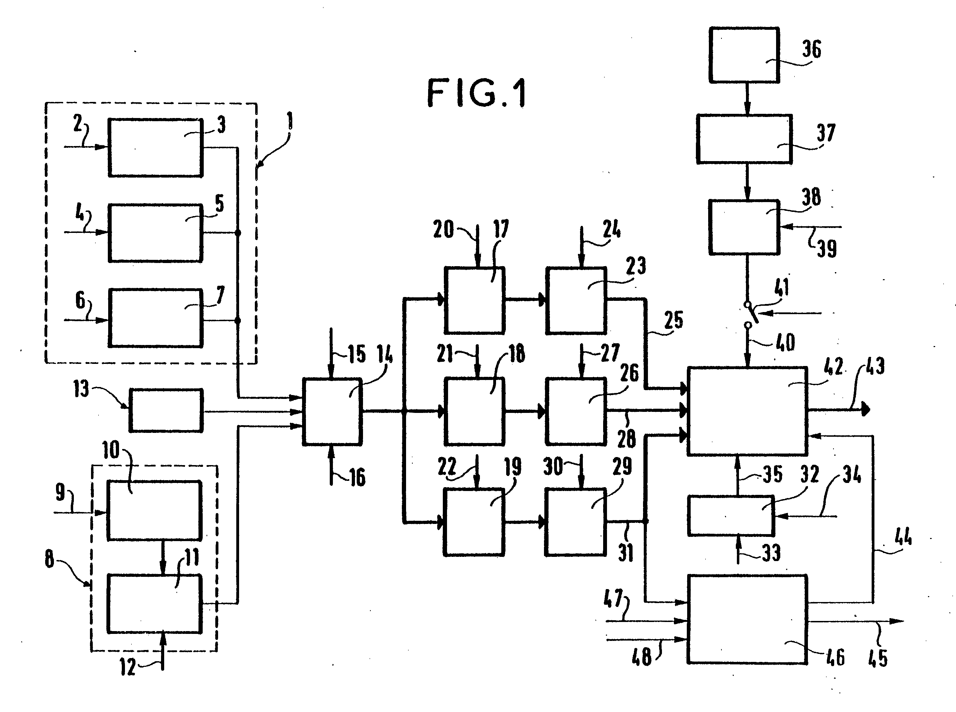

On voit sur la figure 1 un manipulateur à impulsions 1 manipulé par le conducteur au moyen d'une manette et réalisé d'une manière électronique en fonction du temps d'application de la poussée sur la manette. Ainsi un ordre de progression 2 provoque une augmentation de la consigne selon une rampe f(t) obtenue par charge de condensateur 3, par exemple, alors qu'un ordre de régression 4 provoque une diminution de la consigne selon une rampe f(t) obtenue par décharge du condensateur 5 et qu'un ordre de coupure 6 provoque la mise à zéro immédiate de la consigne en agissant sur un commutateur 7.

Le conducteur dispose également d'un manipulateur analogique 8 réalisé au moyen d'un potentiomètre 10 qui permet d'afficher la valeur de la consigne multiple que le conducteur veut obtenir. La position 9 ou commande 9 du potentiomètre 10 commande la limitation de la vitesse de variation de la consigne, la limitation étant telle que la consigne 11 est égale à la position 9 du potentiomètre 10 si celle-ci est stable et peut être remise à zéro 12 immédiatement si le conducteur ouvre le contact de régression rapide. Le conducteur peut sélectionner au choix le manipulateur à impulsions 1 ou le manipulateur analogique 8 au moyen d'un sélecteur 13 de manipulation.

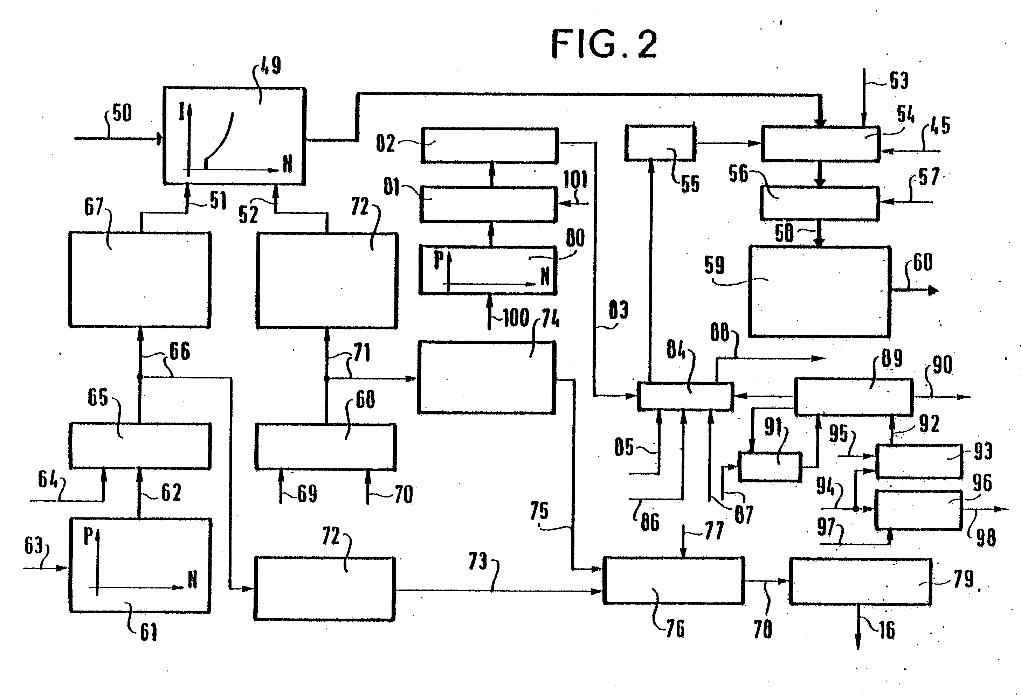

Les informations en provenance du manipulateur à impulsions 1 ou du manipulateur analogique 8 sur ordre du sélecteur de manipulation 13 sont appliquées, par exemple, au travers de portes électroniques non représentées à un organe 14 (par exemple condensateur) établissant la valeur de la consigne dite multiple. Cette consigne multiple peut d'une part, recevoir un ordre de mise à zéro 15 par suite d'arrêt du moteur Diesel et d'autre part peut recevoir des ordres de régression 16 en provenance du régulateur de puissance Diesel (figure 2). Selon la solution retenue les ordres de régression 16 peuvent être définitifs ou seulement temporisés, la valeur de la consigne multiple reprenant sa valeur initiale quand la cause de la régression a disparu. La valeur de la consigne multiple sert à établir une pluralité de consignes particulières réalisées par exemple au moyen de mémoires 17, 18, 19 et constituées respectivement par une consigne dite d'intensité de générateur principal, par une consigne dite d'injection du moteur Diesel et par une consigne dite de tension alternateur. Pour l'établissement des consignes respectives il est introduit également des paramètres respectifs 20, 21, 22 tels que des valeurs limites dues au patinage ou au shuntage par exemple.

La consigne intensité alternateur (mémoire 17) est introduite dans un comparateur 23 réalisé à base d'amplificateurs opérationnels et recevant également la mesure réelle 24 de l'intensité de l'alternateur. A la sortie du comparateur 23 apparaît un signal d'écart 25 entre la mesure et la consigne de l'intensité générateur.

La consigne injection (mémoire 18) est introduite dans un comparateur 26 réalisé à base d'amplificateurs opérationnels et recevant également la mesure réelle 27 de l'injection du moteur Diesel. A la sortie du comparateur 25 apparaît un signal d'écart 28 entre la mesure et la consigne de l'injection du gasoil dans le moteur Diesel.

La consigne de tension générateur (mémoire 19) est introduite dans un comparateur 29 réalisé à base d'amplificateurs opérationnels et recevant également la mesure réelle 30 de la tension du générateur. A la sortie du comparateur 29 apparaît un signal d'écart 31 entre la mesure et la consigne de la tension du générateur principal.

Il existe en outre un comparateur 32 comparant une consigne 33 d'intensité maximale d'excitation et une mesure réelle 34 de l'intensité d'excitation du générateur principal ou auxiliaire (obtenue par une sonde de courant) et délivrant un signal d'écart 35 entre la mesure de l'intensité d'excitation du générateur principal ou auxiliaire et la consigne d'intensité maximale d'excitation.

Il existe en outre un manipulateur 36 de vitesse imposée de la locomotive au moyen d'un potentiomètre et délivrant à une mémoire 37 une consigne de vitesse de la locomotive égale à la position du manipulateur 36 dont le signal de sortie est comparé dans un comparateur 38 avec un signal de mesure 39 de la vitesse de la locomotive obtenue au moyen d'un générateur tachymétrique par exemple. Le signal d'écart 40 entre les mesures de la vitesse de la locomotive et la consigne donnée à cette vitesse est mis hors service au moyen d'un interrupteur 41 selon que l'on veut introduire une vitesse imposée de la locomotive ou non.

Les signaux d'écart 25, 28, 31, 35 et éventuellement 40 sont introduits dans un intégrateur 42 à cinq entrées commandée par des portes ET.

Le but de l'intégrateur 42 est de fournir un ordre d'augmentation si tous les signaux d'écart sont tels que toutes ces mesures soient inférieures aux consignes et de fournir un ordre de diminution si au moins une des mesures est égale ou supérieure à la consigne. Les ordres d'augmentation ou de diminution 43 sont appliqués au dispositif d'excitation du générateur principal, ledit dispositif pouvant être un inducteur de l'alternateur auxiliaire associé à l'alternateur principal ou un dispositif de régulation électronique. Le but proposé est de faire varier le courant d'excitation du générateur principalement dans les limites de tension, d'intensité du générateur et d'injection de gasoil du moteur Diesel. Les ordres d'augmentation et de diminution 43 peuvent être réalisés avec une vitesse de variation limitée.

L'intégrateur 42 reçoit aussi un ordre de blocage de progression 44 (blocage de l'augmentation de l'excitation) d'un intégrateur 46 qui élabore également un ordre d'accélération 45 du Diesel. L'intégrateur 46 reçoit d'une part le signal d'écart 31, une mesure de l'intensité d'excitation 47 du générateur principal et une mesure 48 de la vitesse du moteur Diesel. Le rôle de l'intégrateur 46 est de réaliser lors du fonctionnement en régulation de tension au delà d'un certain seuil de l'excitation, un blocage 44 de l'augmentation de l'excitation et un ordre d'accélération 45 Diesel et ce jusqu'à la valeur maximum du Diesel, car la tension du générateur principal est proportionnelle à sa vitesse de rotation.

Sur la figure 2 on voit un schéma par blocs de la régulation de puissance Diesel réalisée au moyen de composants électroniques d'une façon entièrement automatique.

En traits renforcés apparaît la commande principale de variation de l'injection de gasoil en fonction de la vitesse de rotation du moteur Diesel et d'une courbe prédéterminée de régulation injection-vitesse que le système de régulation doit suivre avec des écarts réduits au minimum.

Un microprocesseur 49 ou analogue sert à établir la consigne de vitesse Diesel provisoire selon une loi vitesse $N = f$ (injection I) prédéterminée sur réception d'un signal électrique 50 caractéristique de la mesure de l'injection du gasoil (mesure faite par des solénoïdes alimentés à des fréquences fixes par exemple). Le microprocesseur 49 reçoit en outre des ordres de correction 51 et 52 qui seront explicités plus loin.

La consigne de vitesse Diesel provisoire ainsi que la consigne 53 extérieure de vitesse Diesel permettant l'établissement dans un intégrateur 54, par exemple, de la consigne de vitesse définitive qui peut être rendue nulle sur ordre 55 de vitesse nulle, élaboré d'une façon qui sera explicitée plus loin. L'intégrateur 54 reçoit aussi l'ordre d'accélération 45 (figure 1) du moteur Diesel en régulation de tension quand le seuil d'excitation est atteint. Le signal sortant de l'intégrateur 54 constituant la consigne de vitesse définitive est envoyé sur un comparateur 56 à amplificateurs opérationnels afin de comparer le signal de consigne avec un signal de mesure 57 de vitesse Diesel obtenue au moyen d'un générateur tachymétrique ou de la fréquence de l'alternateur principal ou auxiliaire. A la sortie du comparateur 56, l'écart 58 entre la consigne de vitesse définitive et la consigne 57 permet au moyen d'amplificateurs 59 de fournir un ordre d'augmentation 60 si la mesure est inférieure à la consigne et un ordre de diminution 60 si la mesure est supérieure à la consigne. Les ordres d'augmentation ou de diminution 60 sont donnés au dispositif de positionnement des commandes de pompe à injection du moteur Diesel et servent à augmenter ou diminuer l'injection d'une façon entièrement automatique.

Les fonctions annexes de régulation ayant pour rôle de réduire la puissance nécessaire en cas d'échauffement ou de manque de pression de suralimentation sont réalisées sans affecter la puissance électrique si la capacité du moteur le permet.

Pour cela il est utilisé un microprocesseur 61 ou analogue pour établir une consigne 62 de pression de suralimentation limite basse en fonction de la vitesse diesel en faisant intervenir une mesure de la vitesse diesel 63 (obtenue par tachymètre par exemple) qui fournit un signal de pression en utilisant une loi pression $P = f$ (vitesse N) prédéterminée. Le signal de consigne 62 et un signal 64 de mesure de la pression de suralimentation (obtenue par capteur analogique) sont introduits dans un comparateur 65 comparant entre le signal de mesure 64 et le signal de consigne 62 et fournissant un signal d'écart 66 entre les deux signaux 62 et 64. Des amplificateurs opérationnels 67 reçoivent le signal d'écart 66 et ont pour rôle de fournir un ordre de correction 51 au microprocesseur 49. L'ordre de correction 51 est un ordre de translation progressive vers les injections plus faibles de la courbe vitesse diesel/injection diesel, I = f(N) tant que le signal de mesure de pression 64 est inférieure à la consigne 62.

En ce qui concerne la régulation commandée par la température, un comparateur 68 compare entre le signal 69 de mesure de température du groupe électrogène et un signal 70 de consigne de température et fournit un signal d'écart 71 entre les signaux 69 et 70. Le signal d'écart 71 est envoyé à des amplificateurs opérationnels 72 qui ont pour rôle de fournir un ordre de correction 52 au microprocesseur 49. L'ordre de correction 52 est un ordre de translation de valeur fixe vers les injections plus faibles de la courbe vitesse diesel = f(injection diesel), I = f(N) tant que la mesure de température 69 est supérieure à la consigne de température 70.

Les signaux d'écart mesure-consigne 66 et 71 servent à établir également un seuil de vitesse maximale diesel dans les limites de pression et de température. Ainsi le signal d'écart 66 attaque un amplificateur 72 délivrant un signal de consigne 73 d'un seuil de vitesse maximale diesel si la mesure de pression 64 est inférieure à la consigne 62. De même le signal d'écart 71 attaque un amplificateur 74 délivrant un signal de consigne 75 d'un seuil de vitesse maximale diesel si la mesure de température 69 est supérieure à la consigne de température 70.

Les deux signaux de consigne 73 et 75 (seuils de vitesse maximale diesel) attaquent un comparateur 76 comparant les signaux de consigne 73 et 75 à un signal de mesure de la vitesse diesel 77, ledit comparateur 76 délivrant un signal d'écart 78 entre la mesure de la vitesse diesel 77 et l'un des signaux de consigne 73 ou 75. Le signal d'écart 78 permet d'élaborer dans l'amplificateur 79 un ordre de régression 16 de la valeur de la consigne multiple 14 (figure 1) si la mesure de la vitesse diesel 77 est supérieure à l'un des signaux de consigne 73 ou 75. Selon des solutions avantageuses les ordres de régression 16 peuvent être définitifs ou seulement temporisés, la valeur de la consigne multiple 14 reprenant sa valeur initiale quand la cause de la régression a disparu.

Ainsi les réductions de couples nécessaires en cas d'échauffement, de manque de pression de suralimentation se traduisent par une translation progressive vers les injections plus faibles de la courbe d'utilisation injection-vitesse de moteur Diesel. Pour compenser le décalage vers le bas de la courbe de puissance en fonction de la vitesse, le régulateur commande une augmentation de la vitesse de rotation du moteur Diesel jusqu'à la valeur limite 73 ou 75 de façon à compenser la diminution du couple et maintenir la puissance constante dans la limite des possibilités du moteur.

Pour limiter l'augmentation de la vitesse, le dispositif commande lorsque le diesel aura atteint une vitesse de rotation limite la diminution de la consigne multiple provenant du manipulateur afin de ne pas dépasser les possibilités du moteur Diesel. Dans les systèmes antérieurs, un échauffement ou un manque de pression de suralimentation se traduisait par une perte de puissance de la locomotive dans tous les cas. Avec le système de régulation selon l'invention, cette perte de puissance systématique n'existe plus qu'à la vitesse maximale du moteur Diesel.

Le système de régulation comporte également la visualisation des informations de signalisation et de tachymétrie du moteur Diesel. Dans tout ce qui suit seront décrits ces organes de signalisation.

Un microprocesseur 80 ou analogue permet l'établissement d'une consigne pression d'huile moteur limite basse en fonction de la vitesse Diesel d'après une courbe pression d'huile P = f (vitesse Diesel N) prédéterminée sur réception d'un signal 100 de mesure de la vitesse Diesel. Un comparateur 81 compare l'écart entre une mesure 101 et la consigne élaborée par 80 et délivre à un amplificateur 82 un ordre d'arrêt 83 si la mesure 101 est inférieure à la consigne élaborée par 80. L'ordre d'arrêt 83 est transmis à une mémoire 84 d'arrêt Diesel qui dans le cas d'un ordre d'arrêt Diesel transmet cet ordre à l'organe 55. La mémoire 84 d'arrêt Diesel agit également dans le cas d'un signal 85 de disparition de la mesure de vitesse Diesel ou un ordre 86 d'arrêt extérieur commandé par le conducteur. La mémoire 84 d'arrêt Diesel peut être réarmée par une commande 87 de réarmement au lancement. La mémoire 84 d'arrêt Diesel fournit une commande de signalisation 88 d'arrêt Diesel exploitable par le conducteur.

Un amplificateur 89 fournit une information 90 de survitesse du Diesel lorsque la mesure est supérieure à la consigne sur réception d'un signal d'écart 92 obtenue dans un comparateur 93 comparant la mesure de vitesse Diesel 94 et une consigne de survitesse 95. Une mémoire 91 de survitesse apte à être réarmée lors du lancement 87 maintient l'information tant qu'un nouvel ordre de lancement n'est pas donné. L'amplificateur 89 donne également un ordre d'arrêt à la mémoire 84.

Un comparateur 96 comparant des consignes 97 de seuils de vitesse à la mesure de vitesse Diesel 94 fournit des informations 98 de seuils de vitesse Diesel.

Le système de régulation selon l'invention comporte par conséquent des fonctions multiples. Il remplace sur la locomotive non seulement le régulateur de puissance du moteur Diesel mais aussi le régulateur d'excitation du générateur principal, le dispositif d'antipatinage dans sa partie active électrique, le dispositif de marche à vitesse imposée, la tachymétrie du moteur Diesel (alimentation des compte-tours et seuils de vitesse dont la survitesse Diesel) et il permet d'alimenter des indicateurs de consommation de gas-oil instantanée et cumulée.

### Revendications

1. Système de régulation pour locomotive ayant un moteur Diesel qui entraîne un générateur principal chargé de fournir l'énergie électrique nécessaire aux moteurs électriques de traction de la locomotive, ledit système de régulation recevant au moins une consigne de commande par l'intermédiaire d'un manipulateur (1 ou 8) sur ordre du conducteur de la locomotive et comportant une régulation de puissance électrique appelée (figure 1) et une régulation de puissance du moteur Diesel (figure 2) qui agissent respectivement sur un dispositif d'excitation du générateur principal et sur un dispositif de commande de pompe d'injection à l'aide de signaux obtenus par comparaison entre des valeurs prédéterminées fonction de la consigne de commande et des mesures correspondantes, caractérisé en ce que la consigne de commande est multiple et comporte au moins une consigne (17) d'intensité et une consigne (19) de tension du générateur principal ainsi qu'une consigne (18) d'injection du moteur Diesel, lesquelles consignes sont respectivement comparées chacune à une mesure correspondante dans un comparateur distinct (23, 26, 29) fournissant des signaux d'écart à un intégrateur (42) dans la régulation de puissance électrique appelée pour commander le dispositif d'excitation du générateur principal de telle sorte qu'on délivre un ordre d'augmentation si lesdits signaux de mesure sont inférieurs auxdites consignes et un ordre de diminution si au moins un desdits signaux de mesure est égal ou supérieur à chacune desdites consignes, et en ce que la régulation de puissance du moteur Diesel est effectuée par action sur la vitesse du moteur Diesel à l'aide du dispositif de commande de pompe d'injection commandé par le signal d'écart (58) d'un comparateur (56) recevant un signal de mesure (57) de la vitesse réelle du moteur Diesel et une consigne définitive de vitesse obtenue par sommation d'une consigne provisoire de vitesse du moteur Diesel avec une éventuelle consigne (45, 53 ou 55) extérieure de vitesse du moteur Diesel, ladite consigne provisoire étant établie automatiquement selon une loi vitesse-injection prédéterminée et en fonction d'une mesure (50) d'injection de gasoil dans le moteur Diesel.

2. Système de régulation selon la revendication 1, caractérisé par le fait que ledit manipulateur est un manipulateur à impulsions (1) et/ou un manipulateur analogique.

3. Système de régulation selon la revendication 1, caractérisé par le fait que ladite consigne multiple affichée par le manipulateur (1, 8) est apte à recevoir un ordre (16) de régression si la pression de suralimentation n'est pas suffisante ou s'il y a échauffement du moteur Diesel.

4. Système de régulation selon la revendication 1, caractérisé par le fait que l'organe d'établissement de la consigne de vitesse Diesel provisoire (49) est apte à recevoir un ordre de translation (51, 52) progressive vers les injections plus faibles de la courbe vitesse diesel-injection pour des pressions de suralimentation trop basses ou des températures du moteur Diesel trop élevées.

## Claims

1. A regulator system for an engine having a diesel motor driving a main generator which supplies the electric power necessary for the electric traction motors of the engine, said regulator system receiving at least one control set value via a manipulator (1 or 8), according to the order of the engine driver, and comprising a regulator to regulate the required electric power (fig. 1), and a regulator to regulate the power of the diesel motor (fig. 2), these regulators acting respectively on an excitation device of the main generator and on a device for controlling the injection pump via signals obtained by comparison between predetermined values signifying control set values and corresponding measurement values, characterized in that the control set value is a multiple value and includes at least one set value (17) for the current intensity and one set value (19) for the voltage of the main generator, as well as a set value (18) for the injection of the diesel motor, these set values being each compared with a corresponding measurement value in a distinct comparator (23, 26, 29) delivering difference signals to an integrator (42) in the regulator for regulating the required electric power in order to control the excitation device of the main generator in such a way that an increase order is delivered, if said measurement signals are below said set values, and a decrease order is delivered if at least one of said measurement signals is equal to or higher than any one of said set values, and that the power regulation of the diesel motor is obtained by acting on the speed of the diesel motor by means of the device for controlling the injection pump, controlled by the difference signal (58) of a comparator (56) which receives a measurement signal (57) concerning the real speed of the diesel motor and a difinitive speed set value obtained by the addition of a temporary set value of the diesel motor speed and an outer set value (45, 53 or 55), if any, relating to the diesel motor speed, said temporary set value being automatically established according to a predetermined speed-injection law and in dependence of a measured value (50) of the gasoil injection into the diesel motor.

2. A regulator system according to claim 1, characterized in that said manipulator is a pulse manipulator (1) and/or an analog manipulator.

3. A regulator system according to claim 1, characterized in that said multiple set value which is made up by the manipulator (1, 8) is intended to receive a decrease order (16), if the boost pressure is insufficient or if the diesel motor temperature increases.

4. A regulator system according to claim 1, characterized in that the member for generating the temporary diesel speed set value (49) is intended to receive a progressive transfer order towards smaller injection flows on the curve diesel speed-injection for insufficiently low boost pressures or for inacceptably high diesel motor temperatures.

**Patentansprüche**

1. Regelsystem für eine Lokomotive mit einem Dieselmotor, der einen Hauptgenerator zur Lieferung der für die elektrischen Traktionsmotoren der Lokomotive benötigten elektrischen Energie antreibt, wobei das Regelsystem mindestens einen Steuersollwert über einen handbetätigten Geber (1 oder 8) aufgrund eines Befehls des Lokomotivführers zugeführt erhält und eine Regelung der angeforderten elektrischen Energie (Fig. 1) sowie eine Leistungsregelung des Dieselmotors (Fig. 2) aufweist, die auf eine Erregervorrichtung des Hauptgenerators bzw. auf eine Steuervorrichtung der Einspritzpumpe mithilfe von Signalen einwirkt, die durch Vergleich zwischen bestimmten vom Steuersollwert abhängigen Werten und entsprechenden Meßwerten erhalten werden, dadurch gekennzeichnet, daß der Steuersollwert aus mehreren Werten besteht, und zwar mindestens einen Stromsollwert (17) und einen Spannungssollwert (19) des Hauptgenerators sowie einen Sollwert (18) für die Einspritzmenge des Dieselmotors umfaßt, daß diese Sollwerte je mit einer entsprechenden Messung in einem eigenen Komparator (23, 26, 29) verglichen werden, der Abweichungssignale an einen Integrator (42) im Leistungsregelkreis für die angeforderte Energie liefert, um die Erregervorrichtung des Hauptgenerators so zu steuern, daß ein Zunahmebefehl geliefert wird, wenn die Meßsignale kleiner als die Sollwerte sind, und ein Abnahmebefehl, wenn mindestens eines der Meßsignale gleich oder größer als jeder der Sollwerte ist, und daß die Leistungsregelung des Dieselmotors durch Einwirkung auf die Geschwindigkeit des Dieselmotors mithilfe der Einspritzpumpen-Steuervorrichtung bewirkt wird, die vom Abweichungssignal (58) eines Komparators (56) gesteuert wird, der ein Meßsignal (57) betreffend die tatsächliche Geschwindigkeit des Dieselmotors und einen endgültigen Geschwindigkeitsollwert des Dieselmotors zugeführt erhält, wobei dieser endgültige Geschwindigkeitssollwert durch Addition eines vorläufigen Geschwindigkeitssollwerts des Dieselmotors und eines eventuellen äußeren Sollwerts (45, 53 oder 55) bezüglich der Geschwindigkeit des Dieselmotors erhalten wird und der vorläufige Sollwert automatisch gemäß einem vorgegebenen Gesetz zwischen Geschwindigkeit und Einspritzung und abhängig von einer Messung (50) der Kraftstoffeinspritzung in den Dieselmotor erstellt wird.

2. Regelsystem nach Anspruch 1, dadurch gekennzeichnet, daß der handbetätigte Geber ein Impulsgeber (1) und/oder ein analoger handbetätigter Geber ist.

3. Regelsystem nach Anspruch 1, dadurch gekennzeichnet, daß der vom Geber (1, 8) gelieferte vielfache Sollwert geeignet ist, einen Rückschrittsbefehl (16) zu empfangen, wenn der Boostdruck nicht ausreicht oder wenn sich der Dieselmotor erwärmt.

4. Regelsystem nach Anspruch 1, dadurch gekennzeichnet, daß das Organ, das den vorläufigen Geschwindigkeitssollwert (49) des Dieselmotors erstellt, einen Befehl für eine zunehmende Verstellung (51, 52) in Richtung auf geringere Einspritzmengen auf der Funktionskurve zwischen der Geschwindigkeit des Dieselmotors und der Einspritzung für zu geringe Boostdrücke oder zu hohe Temperaturen des Dieselmotors empfangen kann.

FIG.1

FIG.2